Europäisches Patentamt

European Patent Office

Office européen des brevets

(11) Publication number: **0 541 799 A1**

## EUROPEAN PATENT APPLICATION
### published in accordance with Art. 158(3) EPC

(21) Application number: 91909361.7

(22) Date of filing: 20.05.91

(86) International application number: PCT/JP91/00670

(87) International publication number: WO 92/20741 (26.11.92 92/29)

(51) Int. Cl.5: **C08L 23/10**, C08L 23/00, C08L 77/00, C08K 3/00, C08K 7/02, B60B 7/00

(43) Date of publication of application: 19.05.93 Bulletin 93/20

(84) Designated Contracting States: DE FR GB

(71) Applicant: **SHOWA DENKO KABUSHIKI KAISHA**
13–9, Shiba Daimon 1–chome
Minato–ku, Tokyo 105(JP)

(72) Inventor: **NAGAO, Yuji Showa Denko K. K**
Kawasaki Plast. Lab. 3–2, Chidoricho
Kawasaki–ku
Kawasaki–shi Kanagawa–ken 210(JP)
Inventor: **NAKAMURA, Junichi Showa Denko K. K.**
Kawasaki Plast. Lab 3–2, Chidoricho
Kawasaki–ku
Kawasaki–shi Kanagawa–ken 210(JP)
Inventor: **ANDO, Eiji Showa Denko K. K.**
Kawasaki Plast. Lab. 3–2, Chidoricho
Kawasaki–ku
Kawasaki–shi Kanagawa–ken 210(JP)

(74) Representative: **Gille, Christian, Dipl.–Ing.**
Türk, Gille, Hrabal, Leifert Patentanwälte
Brucknerstrasse 20
W–4000 Düsseldorf 13 (DE)

(54) **POLYAMIDE/POLYOLEFIN RESIN COMPOSITION.**

(57) A polyamide/polyolefin resin composition which comprises 80 to 40 wt % of a polyamide resin, 1 to 40 wt % of a modified polyolefin, and 20 to 60 wt % of a polypropylene resin and satisfies the relation of formula (I): $\eta_{PP}/\eta_{PA} > 0.75$ wherein $\eta_{PP}$ is a melt viscosity (poise) of the polypropylene resin and $\eta_{PA}$ is a melt viscosity (poise) of the polyamide resin each at the processing temperature thereof and a shear rate of 3,500 $sec^{-1}$. Another polyamide/polyolefin resin composition which comprises 100 parts by weight of a mixture of the three above–mentioned components and 1 to 200 parts by weight of a fibrous reinforcement, an inorganic filler, or a mixture thereof and satisfies the relation of the above–mentioned formula (I).

Technical Field

This invention relates to a polyamide – polyolefin resin composition, particularly to the composition comprising polyamide – polyolefin resins maintaining the excellent physical characteristics of each polyamide and polyolefin resins, specifically having an excellent paintability.

Background Art

Although polyamide resins have been widely utilized for the synthetic fibers, they are also used recently as molding materials owing to their excellent physical and chemical properties. This trend arises because polyamide resins have high mechanical strength, excellent abrasion resistance, anti – chemicals, thermal resistance, and relatively good electric properties sufficiently enough to be required for engineering materials. However, the commercial applicability for molding materials have been limited since the unfavorable characteristics in the change of dimensions and the decrease of the mechanical strength in water absorption arose due to the site of the amide linkages ( – CONH – ).

On the other hand, although polypropylene resins are available in reasonable prices and do not absorb water, polypropylene resins have defects that they are soft and inferior in the physical properties at high temperature.

Therefore, in order to overcome the aforementioned defects inherent to each polyamides and poly – propylene resins, effort has been directed toward the use of both the resins as composite. However, the composite resins merely produced by mixing polyamides and polypropylenes, or merely by melt – mixing thereof, lack the compatibility, and are unable to provide the materials having the excellent properties for the present purpose. Further, even if the composite resins are reinforced by fiber – like reinforcing material or inorganic fillers, they can not provide the sufficient improving effect.

In order to obtain the resin composition maintaining the excellent properties inherent to each polyamide and polypropylene resins, that is, the excellent abrasion resistance, electric properties, thermal resistance, mechanical strength, anti – oil properties of polyamides, combined with low water absorption, hot water – stability, metal halides resistance, impact resistance at low temperature of polypropylene resins; the melt – mixing of the three components comprising polyamides, polyolefins, and the modified polyolefins prepared by grafting unsaturated carboxylic acids or their derivatives have been proposed in Japanese Patent Publication No. Sho 42(1967) – 12546, Japanese Patent Publication No. Sho 45(1970) – 30945, Japanese Patent Publication No. Sho 50(1975) – 7636, resulting in the excellent composition well balanced in a strength, heat deformation resistance, appearance, processability. And by utilizing these excellent physical characteristics, automotive parts, electric appliances, mechanical parts and other industrial parts requiring strength and heat – deformation resistance have been under development for their practical application, and several of these applications are already in use.

However, even with the above composition as mentioned above having such excellent physical characteristics (polymer alloy composition), still insufficient is paintability. Since these polymer alloy compositions contain polypropylene resins that are inferior in paintability, their practical applications are relatively limited at the present stage.

The present inventors have intensively pursued the research aiming particularly to improve paintability while maintaining the excellent physical characteristics of each polyamide and polyolefin resin component, and as a result the present purpose was attained by the appropriate combination of polyamide and polypropylene having a particular ratio of the melt – viscosity of said polyamide resin to that of said polypropylene resin measured at the molding temperature, together with adding the modified polyolefin. And therefore the present invention was made completed on the basis of the aforementioned findings.

Disclosure of Invention

This invention provides a polyamide – polyolefin resin composition comprising
(A) 80 to 40% by weight of polyamide resin,
(B) 1 to 40% by weight of modified polyolefin and
(C) 20 to 60% by weight of polypropylene resin,
the ratio of the melt – viscosity of said polyamide resin (A), $\eta_{PA}$(poise) to that of said polypropylene resin (C), $\eta_{PA}$(poise) measured at the molding temperature under a shearing rate of 3500 sec$^{-1}$ satisfying the following relation:

$$\eta_{PP}/\eta_{PA} > 0.75 \qquad (I)$$

Further, the present invention provides a polyamidepolyolefin resin composition which comprises 100 parts by weight of a mixture of (A) 80 to 40% by weight of polyamide, (B) 1 to 40% by weight of modified polyolefin and (C) 20 to 60% by weight of polypropylene, (D) 1 to 200 parts by weight of fiber − like reinforcing material, inorganic fillers or the mixture thereof, the ratio of the melt − viscosity of said polyamide resin (A), $\eta_{PA}$(poise) to that of said polypropylene resin (C), $\eta_{PP}$(poise) measured at the molding temperature under a shearing rate of 3500 sec$^{-1}$ satisfying the aforementioned relation (I). The present invention also provides wheel caps made of the aforementioned polyamide − polyolefin resin composition.

Best Embodiment for the Present Invention

Polyamide resins (A) to be used in the present invention can be variously used and include, for examples, polylactams such as nylon 6, nylon 11, nylon 12; polyamides prepared with dicarboxylic acids and diamines, such as nylon 66, nylon 610, nylon 612, nylon 46; copolymeric polyamides such as nylon 6/66, nylon 6/12, nylon 6/66/610; semi aromatic polyamides such as nylon 6/6T (T stands for terephthalic acid component), prepared with aromatic dicarboxylic acids like isophthalic acid and meta − xylene diamine, or alicyclic diamines; polyester amides; polyether amides; and also polyester − ether amide resins. Further, the aforementioned polyamides can be either used alone or in a combination of two or more kinds of polyamides.

Polyamides of the present invention can be variously selected from the aforementioned polyamides regardless of their terminal groups, concentration or molecular weight. However, those of high concentration of amino groups at the terminal are preferable. Also the polyamides containing low molecular weight matter such as the respective monomer and/or oligomers still remaining therein or generated during the poly − merization can be utilized.

The modified polyolefins (B) to be used in the present invention can be variously chosen, but usually are the polyolefins having at least one functional group selected from carboxylic acid group such as the groups of acetic acid, acrylic acid, methacrylic acid, fumaric acid, itaconic acid and the like; metal carboxylate group, such as the groups of sodium carboxylate, calcium carboxylate, magnesium carboxylate, zinc carboxylate and the like; carboxylic acid ester group, such as, the groups of methyl ester, ethyl ester, propyl ester, butyl ester, vinyl ester, and so forth; acid anhydride group, such as the groups of maleic anhydride and the like; and the epoxide group. The polyolefins to be used in the present invention are polyethylene, polypropylene, polybutene, ethylene/propylene copolymers, ethylene/butene copolymers, and ethylene/hexene copolymers, and the copolymers thereof with a slight amount of dienes.

Specific examples of such modified polyolefins are ethylene/acrylic acid copolymers, ethylene/methacrylic acid copolymers, ethylene/fumaric acid copolymers, ethylene/methacrylic acid/zinc methacrylate copolymers, ethylene/acrylic acid/sodium methacrylate copolymer, ethylene/isobutyl methacrylate/methacrylic acid/zinc methacrylate copolymers, ethylene/methyl methacrylate/methacrylic acid/magnesium methacrylate copolymers, ethylene/ethyl acrylate copolymers, ethylene/vinyl acetate copolymers, ethylene/glycidyl methacrylate copolymers, ethylene/vinyl acetate/glycidyl methacrylate copolymers, maleic anhydride − grafted polyethylene, acrylic acid − grafted polyethylene, maleic anhydride − grafted ethylene/polypropylene copolymer, acrylic acid − grafted ethylene/propylene copolymers, fumaric acid − grafted ethylene/1 − butene copolymers, ethylene/1 − hexene − itaconic acid copolymers, ethylene/propylene − endo − bicyclo [2.2.1] − 5 − heptene − 2,3 − anhydrodicarboxylic acid copolymers, ethylene/propylene − methacrylic acid grafted glycidyl copolymers, maleic anhydride − grafted ethylene/propylene/1,4 − hexadiene copolymers, fumaric acid − grafted ethylene/propylene/dicyclopentadiene copolymers, maleic acid − grafted ethylene/propylene/norbornadiene copolymers, and acylic acid − grafted ethylene/vinyl acetate copolymers, and the like. These modified polyolefins can be either used alone or in the form of the mixture of two or more kinds thereof.

The aforementioned modified polyolefins can be prepared by the known methods, such as those, for examples, described in Japanese Patent Publication No. Sho 39(1964) − 6810, Japanese Patent Publication No. Sho, 46(1971) − 27527, Japanese Patent Publication No. Sho 50(1975) − 2630, Japanese Patent Pub − lication No. Sho 52(1977) − 43677, Japanese Patent Publication No. Sho 53(1978) − 5716, Japanese Patent Publication No. Sho, 53(1978) − 19037, Japanese Patent Publication No. Sho 53(1978) − 41173, Japanese Patent Publication No. Sho 56(1981) − 9925. Further, various ethylenic ionomers commercially available under the trade names of "Sahrin", "High mirron", "Corpolane" can be used as the modified polyolefins. The degree of polymerization is not particularly limited for use in the present invention, but normally selected from the polymers within the range of the melt index of 0.01 to 100 g/10 min.

3

The polypropylene resins to be used in the present invention are either propylene homopolymer and/or propylene copolymers. The propylene copolymers can be selected from propylene – ethylene copolymers, propylene – butene – 1 copolymers in their block or random copolymers. And also the polypropylene resins of the present invention can be either one kind or the mixture of two or more kinds of the polymers. The molecular weight of the propylene homopolymers, and that of propylene copolymers in use are not particularly limited, but preferably within the melt – flow rate (MFR) range of 0.01 to 50 g/10 min.

Although the components (A), (B) and (C) in the composition of the present invention can be selected variously as mentioned above, wherein the ratio of the melt – viscosity of said component (A), $\eta_{PA}$(poise) to that of said component (C), $\eta_{PP}$(poise) measured at the molding temperature under a shearing rate of 3500 sec$^{-1}$ should satisfy the following relation (I);

$$\eta_{PP}/\eta_{PA} > 0.75 \qquad (I)$$

preferably,

$$\eta_{PP}/\eta_{PA} > 1.0 \qquad (I')$$

In case that the ratio, $\eta_{PP}/\eta_{PA}$, is not more than 0.75, the resultant resin compositions suffer from the desired paintability, and therefore are insufficient. Herein the molding temperature means the temperature at the time of molding to produce molded products, normally within the range of 180 to 350°C.

Each component proportion for producing the polyamide – polyolefin resin composition of highly excellent paintability of the present invention is (A) 80 to 40% by weight of polyamide resin, preferably, over 40%, and not more than 80% by weight, more preferably, 80 to 45% by weight; (B) 1 to 40% by weight of modified polyolefin, preferably 3 to 30% by weight; (C) 20 to 60% by weight of polyolefin resin preferably, 20 to 50% by weight.

In case that (A) polyamide resin is less than 40% by weight, the resultant composition is insufficient in paintability. And in case that (A) polyamide resin is more than 80% by weight, the desired physical properties inherent to polypropylene resins are lost. When the content of the modified polyolefin is less than 1% by weight, the compatibility of polyamide component (A) with polypropylene resin component (C) becomes worse, and as a result, the resultant compositions often lack the desired physical characteristics. Even if the content of the modified polyolefin is more than 40% by weight, the effect expected from this addition is less substantiated, and the physical properties of the resultant resin compositions can be lowered. Further, in case that the content of the polypropylene resin (C) is less than 20% by weight, the resultant resin composition cannot provide the physical properties expected from polyporpylene. Whereas the content of polypropylene resin becomes over 60% by weight, the effect for improving paintability is insufficiently attained.

In the present invention, fiber – like reinforcing material, inorganic fillers, or the mixture thereof can optionally be added, that is, either fiber – like reinforcing material or inorganic fillers or both can be added as the component (D).

The fiber – like reinforcing material include, for example, glass fibers, potassium titanate fibers, metal – coated glass fibers, ceramic fibers, wollastonite, carbon fibers, aramide fibers, metal carbide fibers, super – elastic polyethylene fibers.

The inorganic fillers include, for example, oxides, such as iron oxide, alumina, magnesium oxide, calcium oxide, zinc oxide powder, and the like; hydrated metal oxides, such as aluminum hydroxide, magnesium hydroxide, basic magnesium carbonate, calcium hydroxide, hydrated tin oxide, hydrated zirconium oxide, and the like; carbonate, such as calcium carbonate, magnesium carbonate; silcate, such as talc, clay, bentonite, attapulgite, and the like; borate, such as barium borate, zinc borate, and the like; phosphate, such as aluminum phosphate, sodium tripolyphosphate, and the like; sulfates or sulfites, such as gypsum and the like. Further, the inorganic fillers include glass beads, glass balloons, sand balloons, and other round – shaped materials, glass powder, glass flakes, mica, and the like.

The kind of the above fiber – like reinforcing materials or inorganic fillers can be selected depending on the purpose. The mixture of various fiber – like reinforcing materials and inorganic fillers, plural kinds of fiber – like reinforcing materials, and also plural kinds of inorganic fillers can also be used. And component (D) is added in an amount of 1 to 200 parts by weight, preferably 5 to 180 parts by weight, with respect to 100 parts by weight of the sum of the components (A), (B) and (C).

In case that the content of the component (D) is less than 1 part by weight with respect to 100 parts by weight of the sum of the components (A), (B) and (C), the resultant composition cannot provide the desired physical characteristics such as mechanical strength, whereas the content of the component (D) exceeds

4

200 parts by weight, the effect exepcted by this addition is often less than substantiated and the physical characteristics of the product are deteriorated.

Although the resin composition of the present invention comprises either three components of (A), (B) and (C) or four components of (A), (B), (C) and (D) as major components, other additives, if needed, can be further added to the above components in the range which does not impair the aforementioned physical characteristics. Examples of such additives are dyes, pigments, fillers, nucleating agents, fiber – like additives, plasticizers, lubricants, releasing agents, coupling agents, foaming agents, anti – heat agents, anti – weather agents, flame retardants, anti – electrostatic agents, sliding agents.

The resin composition of the present invention comprises the aforementioned components, together with a required amount of additives, if needed. The ordering of the addition is not particularly specified, so each component can be simultaneously or successively added. The component (B) and the component (C) can be added to the powdered or pelletized the component (A) after the polymerization. To the powdered or pelletized the component (A) after the polymerization can be added the components (B) and (C) and optionally (D). Or to the component (A) in a state of melting after the polymerization, the components (B) and (C), and optionally the component (D) can be added and melt – kneaded.

The resin composition of the present invention is prepared by mixing or kneading each component in the aforementioned mixing ratio. Conventionally known melt – kneading method is preferable. Mixing is made by Bumbury mixer, Henschel mixer and the like. Normally mono – axial or bi – axial extruder can be utilized as a kneader. The temperature for melt – kneading depends on the components and the added amount thereof, but an appropriate temperature can be selected so far as each component melts readily without decomposition. Normally, the temperature can be selected in the range of 180 to 350°C, preferably 200 to 300°C.

The resultant resin compositions can be molded to pipes, tubes, or any other desired forms by injection molding, compression molding or extrusion molding method. After this stage, further coating or painting can be made.

The polyamide – polyolefin resin composition so produced can be effectively utilized as wheel caps and other parts materials.

In the following, the present invention will be further explained by examples and comparative examples.

The testing methods for various physical properties of the polyamide – polyolefin – resin compositions in each example are as follows:

## Preparation of plates (100x100x3 mm thick) to be painted

Plates were made by a screw in – line injection molding machine using the specific compositions. The front temperature of the cylinder was set at 280°C regardless of the kind of polyamide resin (A). The mold temperature was set at 60°C (Examples 1 to 9 and Comparative Examples 1 to 4) or at 80°C (Examples 10 to 21 and Comparative Examples 5 to 8).

## Melt Viscosity

Capilo – graph (Toyo Seiki KK) was employed for the measurements of the melt – viscosity by setting the temperature at 280°C under a shearing rate of 3500 $sec^{-1}$.

## Paintability

Painting was made by a 2 – liquid type polyurethane resin paints (Stron – Ace #680, Kashu KK), and has spray – painted on the plates. The drying condition was set at 100°C for 40 min. After the samples were left at room temperature for a day, squared plate peeling testing and adhesive testing for the painted film were conducted.

## Examples 1 to 9 and Comparative Examples 1 to 4

As seen in Table 1, the desired quantities of polyamide resin (A), the modified polyolefin (B) and polypropylene resin (C) were dry – mixed by a Henshel mixer for 5 min., and the mixture was then melt – kneaded at 280°C by a vent – attached coaxial extruder (inner diameter 30 mm, L/D = 17) to prepare the pellets. The temperature during the preparation of pellet was also set at 280°C.

After the pellets were dried by heating under reduced pressure, the plates were made by injection molding, and the paintability tests were performed. The test results were summarized in Table 1.

Together with the test results, the $\eta_{PP}/\eta_{PA}$ – values measured at 280°C under a shearing rate of 3500 sec$^{-1}$ were shown in Table 1.

Table 1

| | (A) Polyamide resin | | (B) Modified polyolefin | | (C) Polypropylene resin | | $\eta_{PP}/\eta_{PA}$ | Square plate pealing test | Adhesive test for painted film (kgf/cm²) |
|---|---|---|---|---|---|---|---|---|---|
| | polymer | % by weight | polymer | % by weight | polymer | % by weight | | | |
| Example 1 | PA66 *1 | 60 | (i) *5 | 10 | homoPP *7 | 30 | 1.59 | 100/100 | not measurable *11 |
| Example 2 | PA66 *1 | 60 | (ii) *6 | 10 | homoPP *7 | 30 | 1.59 | 100/100 | not measurable *11 |
| Example 3 | PA66 *1 | 60 | (i) *5 | 10 | homoPP *8 | 30 | 0.79 | 100/100 | not measurable *11 |
| Example 4 | PA66 *1 | 60 | (i) *5 | 10 | blockPP *9 | 30 | 1.43 | 100/100 | not measurable *11 |
| Example 5 | PA6 *2 | 60 | (i) *5 | 10 | homoPP *7 | 30 | 3.13 | 100/100 | not measurable *11 |
| Example 6 | PA6 *2 | 60 | (i) *5 | 10 | homoPP *8 | 30 | 1.56 | 100/100 | not measurable *11 |
| Example 7 | PA66 *3 | 60 | (i) *5 | 10 | homoPP *7 | 30 | 1.25 | 100/100 | not measurable *11 |
| Example 8 | PA6 *2 | 40 | (i) *5 | 10 | homoPP *7 | 50 | 3.13 | 100/100 | not measurable *11 |
| Example 9 | PA66 *3 | 70 | (i) *5 | 10 | homoPP *7 | 20 | 1.25 | 100/100 | not measurable *11 |
| Comparative Example 1 | PA66 *1 | 60 | (i) *5 | 10 | homoPP *10 | 30 | 0.40 | 65/100 | 400 to 500 |
| Comparative Example 2 | PA66 *3 | 80 | (i) *5 | 10 | homoPP *10 | 10 | 0.31 | 54/100 | 350 to 500 |
| Comparative Example 3 | PA6 *4 | 60 | (i) *5 | 10 | homoPP *10 | 30 | 0.25 | 45/100 | 300 to 450 |
| Comparative Example 4 | PA6 *4 | 60 | (i) *5 | 10 | homoPP *8 | 30 | 0.5 | 78/100 | 450 to 600 |

*a: Percentage with respect to the total amount of the components (A), (B) and (C).

*1: PA 66, the relative viscosity: 2.30

the concentration of amino group at the terminal: $5.1 \times 10^{-5}$ equiv./g

*2: PA 6, the relative viscosity: 2.52

the concentration of amino group at the terminal: $4.9 \times 10^{-5}$ equiv./g

*3: PA 66, the relative viscosity: 2.85

the concentration of amino group at the terminal: $5.2 \times 10^{-5}$ equiv./g

*4: PA 6, the relative viscosity: 3.20

the concentration of amino group at the terminal: $4.9 \times 10^{-5}$ equiv./g

*5: The grafted modified polypropylene: prepared by grafting 0.35% by weight of maleic anhydride to the isotactic polypropylene having MFR of 1.0 g/10 min. at 230°C.

*6: The copolymer of glycidyl methacrylate-grafted ethylene-vinyl acetate: prepared by the method described in Japanese Patent Publication No. Sho 55(1980)-12449, that is, ethylene-vinyl acetate copolymer was mixed and impregnated with glycidyl methacrylate dissolving dicumyl peroxide at room temperature. This glycidyl methacrylate-impregnating pellets were extruded by a vent-attached coaxial extruder at the temperature of 170°C at the extruding front to prepare the copolymer pellets containing epoxy group grafted thereto (2% by weight of glycidyl methacrylate).

*7: Polypropylene homopolymer, in which MFR according to JIS

7

K 6758 was 0.5 g/10 min.

*8: Propylene block copolymers, in which MFR (JIS K 6758) was 3 g/10 min.

*9: Propylene homopolymer, in which MFR (JIS K 6758) was 0.8 g/10 min.

*10: Propylene homopolymer, in which MFR (JIS K 6758) was 30 g/10 min.

*11: Due to peeling impossibility, the measurement could not be performed.

Examples 10 to 21 and Comparative Examples 5 to 8

As seen in Table 2, the desired quantities of polyamide resin (A), the modified polyolefin (B), polypropylene resin (C) and various reinforcing additives (D) (fiber – like reinforcing material and inorganic filler) were dry – mixed by a Henschel mixer for 5 min., and the mixture was then melt – kneaded at 280°C by a vent – attached coaxial extruder (inner diameter 30 mm, L/D = 17) to prepare the pellets. The temperature at the time of pellet preparation was also set at 280°C.

After the pellets were dried by heating under reduced pressure, the plates were made by a screw in – line injection molding machine, and paintability tests were performed. The test results were summarized in Table 2.

Together with the test results, the $\eta_{PP}/\eta_{PA}$ – values measured at 280°C under a shearing rate of 3500 sec$^{-1}$ were shown in Table 2.

Table 2

| | (A) Polyamide resin | | (B) Modified polyolefin | | (C) Polypropylene resin | | (D) Various Reinforcing additives | | $\eta_{PP}/\eta_{PA}$ | Square plate pealing test | Adhesive test for painted film (kgf/cm²) |
|---|---|---|---|---|---|---|---|---|---|---|---|
| | polymer | % by weight [a] | polymer | % by weight [a] | polymer | % by weight [a] | polymer | % by weight [b] | | | |
| Example 10 | PA66[1] | 60 | (i)[5] | 10 | homoPP[7] | 30 | tarc[14] | 43 | 1.59 | 100/100 | *c |
| Example 11 | PA66[1] | 60 | (ii)[6] | 10 | homoPP[7] | 30 | tarc[14] | 43 | 1.59 | 100/100 | *c |
| Example 12 | PA66[1] | 60 | (i)[5] | 10 | homoPP[7] | 30 | GF[15] | 43 | 1.59 | 100/100 | *c |
| Example 13 | PA66[1] | 60 | (ii)[5] | 10 | blockPP[12] | 30 | tarc[14] | 43 | 1.43 | 100/100 | *c |
| Example 14 | PA6[2] | 60 | (i)[5] | 10 | homoPP[7] | 30 | tarc[14] | 43 | 3.13 | 100/100 | *c |
| Example 15 | PA6[2] | 60 | (i)[5] | 10 | homoPP[13] | 30 | tarc[14] | 43 | 1.56 | 100/100 | *c |
| Example 16 | PA66[3] | 60 | (i)[5] | 10 | homoPP[7] | 30 | tarc[14] | 43 | 1.25 | 100/100 | *c |
| Example 17 | PA6[2] | 40 | (i)[5] | 10 | homoPP[7] | 50 | tarc[14] | 43 | 3.13 | 100/100 | *c |
| Example 18 | PA66[3] | 70 | (i)[5] | 10 | homoPP[7] | 20 | tarc[14] | 43 | 1.25 | 100/100 | *c |
| Example 19 | PA66[1] | 60 | (i)[5] | 10 | homoPP[7] | 30 | tarc[14] | 100 | 1.59 | 100/100 | *c |
| Example 20 | PA66[1] | 60 | (i)[5] | 10 | homoPP[7] | 30 | tarc[14] | 2 | 1.59 | 100/100 | *c |
| Example 21 | PA66[1] | 60 | (i)[5] | 10 | homoPP[13] | 30 | tarc[14] | 43 | 0.79 | 100/100 | *c |
| Comparative Example 5 | PA66[1] | 60 | (i)[5] | 10 | homoPP[10] | 30 | tarc[14] | 43 | 0.40 | 63/100 | 420 to 500 |
| Comparative Example 6 | PA66[3] | 80 | (i)[5] | 10 | homoPP[10] | 10 | tarc[14] | 43 | 0.31 | 50/100 | 330 to 500 |
| Comparative Example 7 | PA6[4] | 60 | (i)[5] | 10 | homoPP[10] | 30 | tarc[14] | 43 | 0.25 | 40/100 | 300 to 450 |
| Comparative Example 8 | PA6[4] | 60 | (i)[5] | 10 | homoPP[13] | 30 | tarc[14] | 43 | 0.5 | 80/100 | 450 to 600 |

*1 to 7 and 10: Same as in Table 1.

*12: Proyplene block copolymer, in which MFR (JIS K 6758) was 0.8 g/10 min.

*13: Propylene homopolymer, in which MFR (JIS K 6758) was 3 g/10 min.

*14: Micron White, 5000A (Hayashi Kasei KK).

*15: Chopped strand fibers having 3 mm in length and 10 μ in diameter, and having the surface treated by an amino-silane coupling agent.

*a: Percentage with respect to the total weight of the components (A), (B) and (C).

*b: Parts by weight with respect to 100 parts by weight of the sum of the components, (A), (B) and (C).

*c: Measurement impossible due to the impossibility of pealing off.

Industrial Applicability

According to the present invention, as explained in the foregoing, there can be produced various kinds of the reinforced polyamide-polyolefin resin compositions having excellent properties inherent to each component, particularly excellent paintability. Thus, a resin composition satisfying the requirement for the good paintability can be easily obtained. Therefore, the polyamide-polyolefin resin compositions of the present invention can be utilized for automotive parts (such as wheel caps, outer plates, and outer trimming and so forth), mechanical parts and industrial parts, which require excellent paintability.

**Claims**

1. A polyamide-polyolefin resin composition comprising (A) 80 to 40% by weight of polyamide resin, (B) 1 to 40% by weight of modified polyolefin and (C) 20 to 60% by weight of polypropylene resin, the ratio of the melt-viscosity of said polyamide resin (A), $\eta_{PA}$(poise) to that of said polypropylene resin (C), $\eta_{PP}$(poise) measured at the molding temperature under a shearing rate of 3500 sec$^{-1}$ satisfying the following relation:

$$\eta_{PP}/\eta_{PA} > 0.75 \quad (I)$$

2. The resin composition according to Claim 1, wherein said modified polyolefin is a polyolefin having at least one kind of the functional group selected from carboxylic acid group, metal carboxylate group, carboxylic ester group, acid anhydride group and epoxy group.

3. The resin composition according to Claim 1, wherein the ratio of the melt-viscosity of said polyamide resin (A), $\eta_{PA}$(poise) to that of said polypropylene resin (C), $\eta_{PP}$(poise) satisfies the following relation:

$\eta_{PP}/\eta_{PA} > 1$   (I')

4. A polyamide – polyolefin resin composition comprising 100 parts by weight of a mixture of (A) 80 to 40% by weight of polyamide resin, (B) 1 to 40% by weight of modified polyolefin, and (C) 20 to 60% by weight of polypropylene resin, and (D) 1 to 200 parts by weight of fiber – like reinforcing material, inorganic fillers, or the mixture thereof, the ratio of the melt – viscosity of said polyamide resin (A), $\eta_{PA}$ – (poise) to that of said polypropylene resin (C), $\eta_{PP}$(poise) measured at the molding temperature under a shearing rate of 3500 sec$^{-1}$ satisfying the following relation:

$\eta_{PP}/\eta_{PA} > 0.75$   (I)

5. The resin composition according to Claim 4, wherein said modified polyolefin (B) is a polyolefin having at least one kind of the functional group selected from carboxylic acid group, metal carboxylate group, carboxylic ester group, acid anhydride group, and epoxy group.

6. The resin composition according to Claim 4, wherein the ratio of the melt – viscosity of said polyamide resin (A), $\eta_{PA}$(poise) to that of said polypropylene resin (C), $\eta_{PP}$(poise) satisfies the following relation:

$\eta_{PP}/\eta_{PA} > 1$   (I')

7. Wheel caps made of the resin composition as defined in Claim 1 or 4.

# INTERNATIONAL SEARCH REPORT

International Application No PCT/JP91/00670

## I. CLASSIFICATION OF SUBJECT MATTER (if several classification symbols apply, indicate all) 6

According to International Patent Classification (IPC) or to both National Classification and IPC

Int. Cl$^5$ C08L23/10, 23/00, 77/00, C08K3/00, 7/02, B60B7/00

## II. FIELDS SEARCHED

Minimum Documentation Searched 7

| Classification System | Classification Symbols |
|---|---|
| IPC | C08L23/00-23/36, 77/00-77/12, C08K3/00-13/08, B60B7/00-7/20 |

Documentation Searched other than Minimum Documentation
to the Extent that such Documents are Included in the Fields Searched 8

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, B2, 1-19813 (Mitsui Petrochemical Industries, Ltd.), April 13, 1989 (13. 04. 89), (Family: none) | 1-7 |
| X | JP, B2, 63-42662 (Toyobo Co., Ltd.), August 24, 1988 (24. 08. 88), (Family: none) | 1-7 |
| X | JP, A, 62-158740 (Tonen Sekiyukagaku K.K.), July 14, 1987 (14. 07. 87) & EP, A, 235876 | 1-7 |
| X | JP, A, 62-158739 (Tonen Sekiyukagaku K.K.), July 14, 1987 (14. 07. 87) & EP, A, 235876 | 1-7 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 5, 1991 (05. 06. 91) | June 24, 1991 (24. 06. '91) |

| International Searching Authority | Signature of Authorized Officer |
|---|---|
| Japanese Patent Office | |

Form PCT/ISA/210 (second sheet) (January 1985)